# EUROPÄISCHE PATENTSCHRIFT

(11) **EP 0 467 148 B1**
(45) Veröffentlichungstag und Bekanntmachung des Hinweises auf die Patenterteilung: **26.04.1995**
(21) Anmeldenummer: 91111002.1
(22) Anmeldetag: 03.07.1991
(51) Int. Cl.: F04D 19/04, F16C 32/04

(54) **Einrichtung zum Fluten von schnellrotierenden Vakuumpumpen**
Venting device for fast rotating vacuum pumps
Dispositif d'admission pour pompes à vide à grande vitesse

(30) Priorität: 16.07.1990 DE 4022523
(43) Veröffentlichungstag der Anmeldung: 22.01.1992
(73) Patentinhaber: Balzers-Pfeiffer GmbH, 35614 Asslar (DE)
(72) Erfinder: Bernhardt, Helmut, W-6330 Wetzlar 22 (DE)

(56) Entgegenhaltungen:
- EP-A- 0 193 609
- DE-A- 2 034 327
- DE-A- 2 034 327
- DE-A- 2 825 551
- US-A- 4 588 361
- SOVIET INVENTIONS ILLUSTRATED,P,Q Sektionen, Woche 9009, 11. April 1990 DERWENT PUBLICATIONS LTD., London
- PATENT ABSTRACTS OF JAPAN, unexamined applications, M Sektion, Band 13, Nr. 28,23. JUnner 1989 THE PATENT OFFICE JAPANESE GOVERNMENT Seite 93 M 788

## Beschreibung

Die Erfindung betrifft eine Einrichtung zum Fluten von schnell rotierenden Vakuumpumpen nach dem Oberbegriff des 1. Patentanspruches.

Zu den am weitesten verbreiteten schnell rotierenden Vakuumpumpen gehören die Turbomolekularpumpen. An deren Beispiel soll im folgenden die Aufgabenstellung und deren Lösung erläutert werden.

Turbomolekularpumpen gewährleisten durch ihr selektives Pumpverhalten eine öldampffreie Pumptechnik. Wird aber eine Turbomolekularpumpe außer Betrieb gesetzt, dann können Öldämpfe oder andere Verunreinigungen von der Vorvakuumseite zur Hochvakuumseite gelangen und dort eine erhebliche Verunreinigung hervorrufen, welche sich als Anfangsverschmutzung beim Wiedereinschalten der Pumpe sehr nachteilig bemerkbar macht. Die Verunreinigungen, insbesondere die Ölreste, haben eine beträchtliche Verlängerung der Auspumpzeit zur Folge. Dies kann verhindert werden, wenn die Turbomolekularpumpe nach dem Abschalten geflutet wird. Dadurch werden die inneren Oberflächen der Pumpe und des Rezipienten mit Flutgas belegt, wodurch sich die Pumpzeit nach Wiedereinschalten wesentlich verkürzt. Außerdem bewirkt das Fluten eine Verkürzung der Auslaufzeit des Rotors, ein Kriterium, welches besonders bei Pumpen mit Magnetlagerung wegen der fehlenden Reibung von Bedeutung ist.

Turbomolekularpumpen mit Fluteinrichtungen werden in der DE PS 18 09 902 und in der Zeitschrift "Vakuumtechnik" 20. Jahrgang (1971), Heft 7, Seite 201 ff, beschrieben.

Aus diesen Veröffentlichungen geht hervor, daß einige Flutbedingungen optimal festgelegt werden konnten, um eine möglichst kurze Auspumpzeit nach Wiedereinschalten der Pumpe zu erlangen.

Ein wichtiges Problem jedoch ist seither nur in äußerst unbefriedigender Weise behandelt worden. Es betrifft die Flutrate. Die Fragestellung hierbei ist, mit welcher Geschwindigkeit das Flutgas in die Pumpe eingelassen werden soll, um die optimalen Flutbedingungen weiter zu verbessern und vor allem nachteilige Einwirkungen zu vermeiden.

Dieses Problem besteht im besonderen Maße bei magnetisch gelagerten Pumpen. Die Kriterien, die hier vor allem in Betracht gezogen werden müssen, sind die lange Auslaufzeit, welche durch die fehlende Reibung bedingt ist, und die Begrenzung von äußeren Kräften, welche auf den Rotor wirken.

Die Messung von axialen Rotorkräften, welche durch die Lagerung und das Rotorgewicht bedingt sind, wird in der SU-1476197 beschrieben. Man erhält damit Hinweise auf den technischen Zustand der Pumpe. In der DE-A-2825551 wird die Registrierung der Axialkraft eines magnetisch gelagerten Rotors auf ein mechanisches Stützlager im Falle der Auslenkung aus der axialen Gleichgewichtslage beschrieben. Dies wird dann zur Steuerung der Rückführung des Rotors in die Gleichgewichtslage benutzt. Zur Lösung der vorliegenden Aufgabenstellung sind diese Methoden jedoch nicht geeignet. Im vorliegenden Falle geht es nicht allein um die Kräfte, welche durch Lagerung und Rotorgewicht bedingt sind, sondern auch um Kräfte auf den Rotor, welche durch einen mehr oder weniger schnellen Gaseinlaß, hervorgerufen werden.

Die Frage der Flutrate reduziert sich zunächst auf den Querschnitt der Ventilöffnung. Bei kleinem Querschnitt, d.h. wenn die Pumpe zu langsam geflutet wird, ergibt sich eine zu lange Auslaufzeit des Rotors, welche in den meisten Anwendungsfällen nicht mehr vertreten werden kann.

Bei großem Querschnitt werden die Kräfte, welche durch das einströmende Gas auf den Rotor wirken, so groß, daß es zu kritischen Situationen kommen kann, in denen zum Beispiel der Rotor durch Überlastung des Axiallagers zum Kontakt mit den Notlagern kommt. Bei mittleren Querschnitten überschneiden sich die beiden nachteiligen Wirkungen, so daß durch die Variation des Querschnittes der Ventilöffnung keine befriedigende Lösung erreicht wird. Dazu kommt noch, daß bei gleicher Baugröße einer Pumpe Rezipienten mit sehr unterschiedlichen Volumina angeschlossen werden können, was zusätzlich die Vorausbestimmung optimaler Flutbedingungen für einen bestimmten Pumpentyp erschwert.

Für konventionell gelagerte Pumpen stellen sich die Verhältnisse folgendermaßen dar: Bei Pumpen kleiner und mittlerer Baugröße läßt sich ein Kompromiß zwischen den Forderungen nach genügend hoher Flutrate und nicht allzu großen Kräften auf den Rotor noch einigermaßen realisieren, da die Kugellager kurzzeitig hohe Kräfte aufnehmen können. Bei großen Pumpen muß die Flutrate erhöht werden, damit die Flutzeit nicht zu lang wird. Dies hat aber größere Kräfte zur Folge, was eine höhere Beanspruchung der Lager bedeutet und andere gravierende Nachteile mit sich bringt. Zum Beispiel werden die Verformungen der Rotorschaufeln durch die Flutkräfte umso größer sein, je größer der Rotordurchmesser ist. Schon aus Gründen der Materialfestigkeit sind hier Grenzen gesetzt.Um eine Berührung mit den Statorscheiben zu vermeiden, müßte man den Abstand zwischen Rotor und Statorscheiben vergrößern oder andere Maßnahmen ergreifen, welche negative Auswirkungen auf die Leistungsdaten der Pumpe haben.

Eine weitere Möglichkeit, die Flutrate zu variieren, besteht darin, das Flutventil in zeitlich fest vorgegebenen Intervallen zu öffnen und zu schließen. Dies erfordert einen Zusatzaufwand, welcher durch die Ergebnisse nicht gerechtfertigt wird. Ein optimaler Flutvorgang ist auch hiermit nicht zu erreichen, da unterschiedliche Rahmenbedingungen, wie zum Beispiel Rezipientengröße, Art und Druck des Flutgases und Betrieb der Vorpumpe, hierbei nicht berücksichtigt werden. Es ergeben sich je nach Taktzeiten die gleichen Nachteile, wie oben beschrieben.

Der Erfindung liegt die Aufgabe zugrunde, eine Einrichtung zu konstruieren, die es ermöglicht, schnell rotierende Vakuumpumpen optimal zu fluten. Dies bedeutet, daß die eingelassene Menge an Flutgas so groß ist, daß eine befriedigend kurze Auslaufzeit des Rotors erreicht wird und daß gleichzeitig zu jedem Zeitpunkt des Flutens die Kräfte, welche durch das einströmende Flutgas zusätzlich auf den Rotor wirken, in solchen Grenzen gehalten werden, daß der Rotor selbst, der Antrieb und die Lagerung nicht in kritische Phasen kommen, in denen der Betrieb gefährdet oder beeinträchtigt wird.

Die Aufgabe wird durch die kennzeichnenden Merkmale des 1. Patentanspruches gelöst. Die Ansprüche 2 bis 4 stellen weitere vorteilhafte Ausgestaltungen der Erfindung dar.

Die Lösung der Aufgabenstellung entsprechend den Merkmalen des ersten Patentanspruches erlaubt ein optimales Fluten. Das bedeutet, daß es möglich ist, ein Flutventil von großem Querschnitt zu verwenden und während des Auslaufens des Rotors jeweils eine so große Menge Flutgas einzulassen, daß die Kräfte, die insgesamt auf den Rotor wirken, einen vorgegebenen Wert, welcher durch Sicherheitskriterien bestimmt wird, nicht überschreiten. Die Auslaufzeit des Rotors wird damit bei maximaler Sicherheit auf ein Minimum reduziert.

Die Steuerung der Taktzeiten des Flutventils durch die Drehzahl des Rotors nach Anspruch 2 ist eine weitere Möglichkeit, eine maximale Menge von Flutgas unter Berücksichtigung der Sicherheitskriterien einzulassen. Die eingelassene Gasmenge muß bei hohen Drehzahlen klein sein, d.h. kurze Öffnungszeiten des Flutventils, und kann mit abnehmender Drehzahl erhöht werden, d.h. längere Öffnungszeiten.

Die Ansprüche 2 bis 4 zeigen Möglichkeiten auf, die Kräfte, welche auf Rotoren mit unterschiedlichen Lagerungen wirken, direkt oder indirekt zu messen.

Bei Rotoren mit aktiv geregelter Magnetlagerung bietet sich in den meisten Fällen nach Anspruch 2 eine Kraftmessung über die im Regelkreis des Magnetlagers ohnehin zur Verfügung stehenden Meßwerte an. Die Regelung wird in diesen Fällen so realisiert, daß der Arbeitspunkt des Rotors, d.h. seine axiale Position, konstant ist. Damit ist auch in dem angeführten Beispiel der Luftspalt zwischen Axialmagnet und der auf dem Rotor montierten Axiallagerscheibe konstant. Bei konstantem Luftspalt ist der Strom im Elektromagneten direkt ein Maß für die erzeugte Kraft. Will man die Kraft auf ein vorgegebenes Maximum begrenzen, so ist dies gleichbedeutend damit, den Strom auf den zugehörigen Wert zu begrenzen. Man benötigt nur eine einfache Grenzwertüberwachung, die das Flutventil beim Überschreiten des Grenzwertes schließt. Wenn kein weiteres Flutgas mehr einströmt, wird der Rotor abgebremst, und der Differenzdruck an den Rotorscheiben sinkt. In der Pumpe findet ein Druckausgleich statt, wodurch die auf den Rotor ausgeübte Kraft abnimmt. Nach Durchlaufen einer Hysterese, die zum Beispiel in der Grenzwertüberwachung realisiert sein kann, wird das Flutventil wieder geöffnet etc. Mit der Hysterese wird die Schalthäufigkeit des Ventils eingestellt.

Bei Rotoren, deren Position nicht durch eine aktive Magnetlagerung geregelt wird, sondern zum Beispiel durch eine Hybridlagerung, empfiehlt sich eine Lösung nach Anspruch 4. Wenn Rotor und Stator durch eine Federkonstante miteinander verknüpft sind, ergibt sich eine Kennlinie der Kraft in Abhängigkeit von der Auslenkung, so daß eine Begrenzung der Kraft auf eine Begrenzung der Auslenkung zurückgeführt werden kann. Die oben beschriebene Stromgrenzwertüberwachung ist also lediglich durch eine Weggrenzwertüberwachung zu ersetzen. Im übrigen ist die Funktionsweise gleich. Die Verschiebung der axialen Gleichgewichtslage des Rotors, welche durch das einströmende Flutgas bewirkt wird, kann zur Regelung des Flutventils benutzt werden, indem auch hier eine Begrenzung der Kraft auf eine Begrenzung der Auslenkung des Rotors zurückgeführt wird.

Bei mechanisch gelagerten Rotoren kann auch eine direkte Kraftmessung nach Anspruch 4, zum Beispiel durch Kraftsensoren, zur Steuerung des Flutventils verwendet werden.

Die dargestellten Möglichkeiten, Kräfte, welche auf einen Rotor wirken, zu messen, werden hier am Beispiel von Axialkräften auf den Rotor einer Turbomolekularpumpe beschrieben. Entsprechende Kriterien und Lösungsmöglichkeiten gelten auch für Kräfte, welche in radialer Richtung auf einen Rotor wirken.
Die Aufgabenstellung und die Lösungsmöglichkeiten können ebenso gut auf andere Vakuumpumpen übertragen werden. Zum Beispiel können radiale Schwingungen des Rotors einer Molekularpumpe vom Typ Holweck durch Steuerung des Flutvorganges in Grenzen gehalten werden. die Messung der Kräfte auf den Rotor wird dann zum Beispiel über eine Wegmessung entsprechend Anspruch 4 vorgenommen.

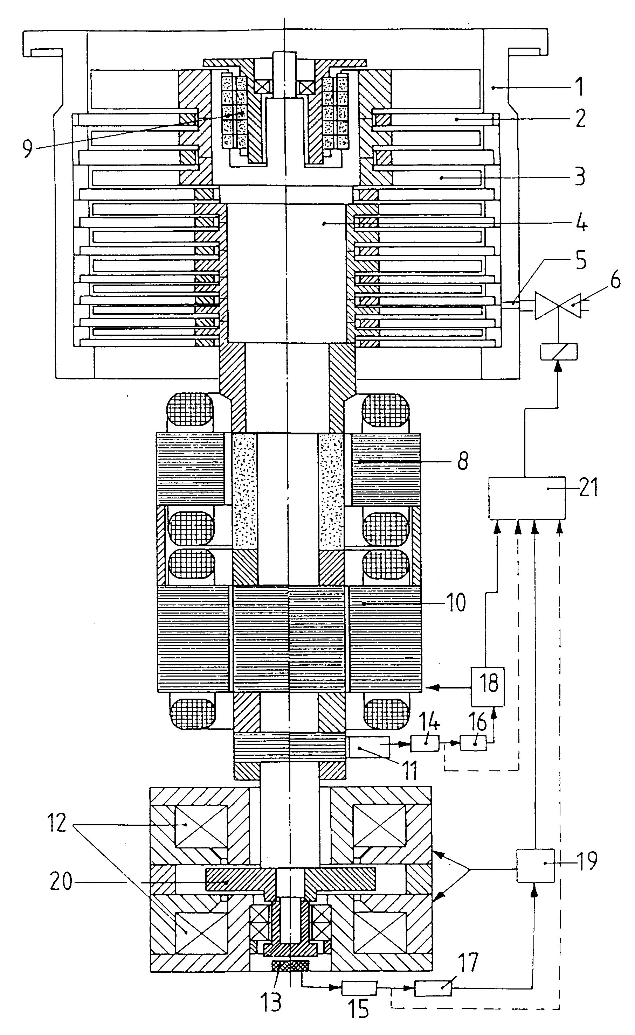

Anhand der Abbildung wird die Erfindung näher erläutert.

Im Gehäuse 1 einer Turbomolekularpumpe befinden sich die Pumpelemente, bestehend aus den Statorscheiben 2 und den Rotorscheiben 3, welche mit der Rotorwelle 4 verbunden sind. Zum Flutgaseinlaß ist am Gehäuse ein Gaseinlaßstutzen 5 mit dem Flutventil 6 angebracht. Die Antriebsvorrichtung für die Rotorwelle ist mit 8 bezeichnet. Die Lagerung des Rotors erfolgt in dem hier dargestellten Beispiel durch ein passives magnetisches Radiallager 9 auf der oberen Seite der Pumpe, auf der sich der Ansaugstutzen befindet, durch ein aktives magnetisches Radiallager 10 unterhalb der Antriebseinheit 8 und durch ein aktives magnetiches Axiallager 12 am unteren Ende der Rotorwelle.
Die Radialsensoren 11 und der Axialsensor 13 dienen zur Messung der radialen bzw. axialen Position der Rotorwelle. Durch die Sensorauswertungen 14, 15 und die Regler 16, 17 entstehen Steuersignale, welche über Leistungsverstärker 18, 19 die Störme in den aktiven Magnetlagern so regeln, daß der Rotor in einer bestimmten stabilen Position bleibt.

Die Regelung des aktiven magnetischen Axiallagers erfolgt zum Beispiel so, daß die Spalte zwischen den Axialmagneten 12 und der Axiallagerscheibe 20 konstant sind. Wirkt eine zusätzliche Kraft auf den Rotor, dann ändert sich der Strom in den Elektromagneten und ist somit ein direktes Maß für die Kraft.

Durch die Grenzwertüberwachung 21 wird das Flutventil 6 bei Überschreitung einer vorgegebenen Stromstärke, welche einer bestimmten Kraft auf den Rotor entspricht, geschlossen. Danach findet innerhalb der Pumpe ein Druckausgleich statt, wodurch die Kraft auf den Rotor wieder abnimmt. Damit sinkt auch die Stromstärke, und das Flutventil wird wieder geöffnet.

In anderen Fällen, in denen keine Stromänderung eines aktiven Magnetlagers zur Regelung zur Verfügung steht, wird eine Verschiebung des Rotors zur Kraftmessung benutzt. Für diese Fälle ist ein Axialsensor 13 vorhanden. Ein direker Zusammenhang zwischen Spaltbreite und Krafteinwirkung ermöglicht es, über die Grenzwertüberwachung 21 das Flutventil 6 zu steuern.

## Patentansprüche

1. Einrichtung zum Fluten von schnell rotierenden Vakuumpumpen bestehend aus einem steuerbaren Flutventil (6), welches zum Flutgaseinlaß über einen Gaseinlaßstutzen (5) am Gehäuse (1) einer Vakuumpumpe angebracht ist, dadurch gekennzeichnet, daß eine Steuereinrichtung (21) vorhanden ist, welche abhängig von Kräften, die auf den Rotor in axialer und/oder radialer Richtung wirken, das Flutventil so ansteuert, daß bei hinreichend großem Querschnitt des Flutventils die einströmende Gasmenge so bemessen wird, daß eine minimale Auslaufzeit des Rotors erreicht wird und die einströmende Gasmenge aber ständig in solchen Grenzen gehalten wird, daß die Kräfte, die insgesamt auf den Rotor wirken, d.h. einschließlich der durch den Flutvorgang hervorgerufenen Kräfte, einen vorgegebenen Wert nicht überschreiten.

2. Einrichtung nach Anspruch 1, wobei der Rotor der Vakuumpumpe magnetisch gelagert ist und mindestens ein Freiheitsgrad durch ein aktiv geregeltes, magnetisches Lager stabilisiert wird und die Regelung so erfolgt, daß bei konstantem Abstand zwischen Rotor und Stator zusätzliche Kräfte, welche auf den Rotor wirken, durch eine Stromänderung im aktiv geregelten Magnetlager kompensiert werden, dadurch gekennzeichnet, daß die Steuereinrichtung als Grenzwertüberwachung ausgeführt ist, welche das Flutventil betätigt, wenn der Strom im Magnetlager vorgegebene Grenzwerte überschreitet.

3. Einrichtung nach Anspruch 1, wobei mindestens ein Positionssensor zur Messung des Abstandes zwischen Rotor und Stator vorhanden ist, dadurch gekennzeichnet, daß die Steuereinrichtung als Grenzwertüberwachung ausgeführt ist, welche das Flutventil in Abhängigkeit des Abstandes zwischen Rotor und Stator betätigt.

4. Einrichtung nach Anspruch 1, wobei mindestens ein Freiheitsgrad des Rotors der Vakuumpumpe durch ein mechanisches Lager stabilisiert wird, dadurch gekennzeichnet, daß ein Kraftsensor am Ort des mechanischen Lagers vorhanden ist und daß die Steuereinrichtung als Grenzwertüberwachung ausgeführt ist, welche das Flutventil in Abhängigkeit der Kräfte, die auf den Rotor wirken, betätigt.

## Claims

1. Apparatus for venting rapidly rotating vacuum pumps, comprising a controllable venting valve (6) which is fitted on the housing (1) of a vacuum pump to admit venting gas through a gas inlet connection (5), characterised in that a control (21) is provided and, dependent on forces acting on the rotor in an axial and/or radial direction, controls the venting valve in such a way that, given a large enough cross-section of the venting valve, the incoming volume of gas is such that a minimum running down time of the rotor is obtained but the incoming volume of gas is kept constantly within limits such that the total forces acting on the rotor, i.e. including the forces resulting from the venting process, do not exceed a predetermined value.

2. Apparatus according to claim 1, wherein the rotor of the vacuum pump is mounted magnetically and at least one degree of freedom is stabilised by an actively regulated magnet bearing, and regulation is effected in such a way that, with a constant distance between the rotor and the stator, additional forces acting on the rotor are compensated by a change of current in the actively regulated magnet bearing, characterised in that the control is in the form of a limit monitor which actuates the venting valve when the current in the magnet bearing exceeds predetermined limits.

3. Apparatus according to claim 1, wherein at least one position sensor is provided to measure the distance between the rotor and the stator, characterised in that the control is in the form of a limit monitor which actuates the venting valve dependent on the distance between the rotor and the stator.

4. Apparatus according to claim 1, wherein at least one degree of freedom of the vacuum pump rotor is stabilised by a mechanical bearing, characterised in that a force sensor is provided at the location of the mechanical bearing, and that the control is in the form of a limit monitor which actuates the venting valve dependent on the forces acting on the rotor.

## Revendications

1. Dispositif d'admission pour pompe à vide rotative à grande vitesse composé d'une vanne de remise à l'air commandée (6), permettant la remise à l'air par l'intermédiaire d'un piquage (5)et montée sur le corps (1) d'une pompe à vide, caractérisée par la présence d'une commande (21) qui dépend des forces qui interviennent sur le rotor en direction axiale et/ou radiale, qui actionne la vanne de remise à l'air de telle façon que, lorsque la section transversale de la vanné de remise à l'air est suffisamment grande, le volume de gaz introduit est tel que l'on obtient un ralentissement minimum du rotor et que le volume de gaz introduit est conservé constant à l'intérieur des limites tel que le total des forces qui s'exercent sur le rotor, c'est-à-dire y compris les forces résultant du procédé de remise à l'air, ne dépassent pas une valeur prédéterminée.

2. Dispositif suivant exigence 1, dans lequel le rotor de la pompe à vide est monté de façon magnétique et, avec au minimum un degré de jeu, est stabilisé par un palier magnétique actif régulé et la régulation s'effectue de telle manière que, avec une distance constante entre le rotor et le stator, les forces additionnelles s'exerçant sur le rotor sont compensées par un changement du courant dans le palier magnétique actif régulé, caractérisé par le fait que le contrôle est dans le champ d'action d'un détecteur de limites qui actionne la vanne d'entrée d'air quand le courant, dans le palier magnétique, excède une valeur limite pré-définie.

3. Dispositif suivant exigence 1, dans lequel il existe au moins un détecteur pour mesurer la distance entre le rotor et le stator, caractérisé par le fait que le contrôle est dans le champ d'action d'un détecteur de limites qui actionne la vanne d'entrée d'air en fonction de la distance entre le rotor et le stator.

4. Dispositif suivant exigence 1, dans lequel un minimum de un degré de jeu du rotor de la pompe à vide est stabilisé par un palier mécanique, caractérisé par le fait qu'un détecteur de forces est prévu dans le logement du palier mécanique et que le contrôle se trouve dans le champ d'action d'un détecteur de limite qui actionne la vanne d'entrée d'air en fonction des forces qui s'exercent sur le rotor.
